# EUROPEAN PATENT APPLICATION

(11) **EP 2 081 356 A1**
(43) Date of publication of application: **22.07.2009**
(21) Application number: 08150417.7
(22) Date of filing: 18.01.2008
(51) Int. Cl.: H04L 29/06, G06F 21/00

(54) **Method of and telecommunication apparatus for SIP anomaly detection in IP networks**

(71) Applicant: Fraunhofer-Gesellschaft zur Förderung der angewandten Forschung e.V., 80686 München (DE)
(72) Inventor: Ehlert, Sven, 10247, Berlin (DE)
(74) Representative: Müller, Wolfram Hubertus

(57) **Abstract**

The invention provides for a method of and a telecommunication apparatus for anomaly detection in Internet-Protocol (IP)-Networks wherein the Session Initiation Protocol (SIP) is used for communication (SIP IP-Networks). The method comprises the steps of passively monitoring of SIP messages between at least one SIP User agent (410,420,430) and a SIP Proxy Server (200), modeling the SIP Proxy Server's server transactions by finite state machines on the basis of the passively monitored SIP messages, each state machine modeling a server transaction of the SIP Proxy Server (200), performing statistical evaluation on the state machines, and determining from the statistical evaluation if an anomaly is present.

## Description

The present invention regards a method of and a telecommunication apparatus for anomaly detection in SIP IP-Networks. SIP IP-Networks are Internet-Protocol (IP)-Networks that use the Session Initiation Protocol (SIP) for communication. Examples for such networks are SIP Voice-over-IP (VoIP) Networks, IPTV Networks and IP Multimedia Subsystem (IMS) Next Generation Networks.

The Session Initiation Protocol (SIP) has established itself as the de-facto standard for current Voice-over-IP (VoIP) networks. The protocol is specified in RFC 3261.

RFC 3261 defines two events that last a certain amount of time, which are Dialogs and Transactions. A dialog is a peer-to-peer SIP relationship between two User Agents (UAs) that persists for some time. A dialog is established by SIP messages, such as a 2xx response to an INVITE request. Such a dialog can be terminated with a BYE message at a later time. Depending on the type of the session, dialogs can exist for a considerable amount of time, e.g., during a voice call or a video transmission. SIP transactions have a client side and a server side. The client side is known as a client transaction and the server side as a server transaction. The client transaction sends the request, and the server transaction sends the response. The client and server transactions are logical functions that are embedded in any number of elements. Specifically, they exist within user agents and statefull proxy servers. A SIP transaction consists of a single request and any responses to that request, which include zero or more provisional responses and one or more final responses. As such, any dialog consists of individual transactions.

Transactions are modelled within RFC 3261 through a state machine. The state machine defines which events are valid and what and how the state will change if a certain event occurs. State machines are defined in RFC 3261 both for a User Agent Client (UAC) and a User Agent Server (UAS) such as a SIP Proxy Server. Additionally, they are different for INVITE messages and Non-INVITE messages, thus resulting in altogether four different state machines: UAS INVITE state machine, UAS Non-INVITE state machine, UAC INVITE state machine, and UAC Non-INVITE state machine.

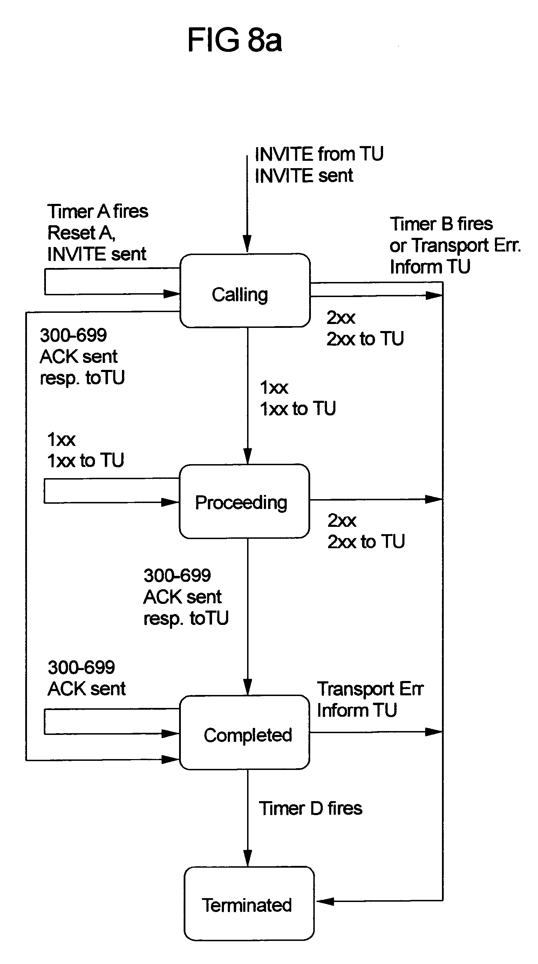

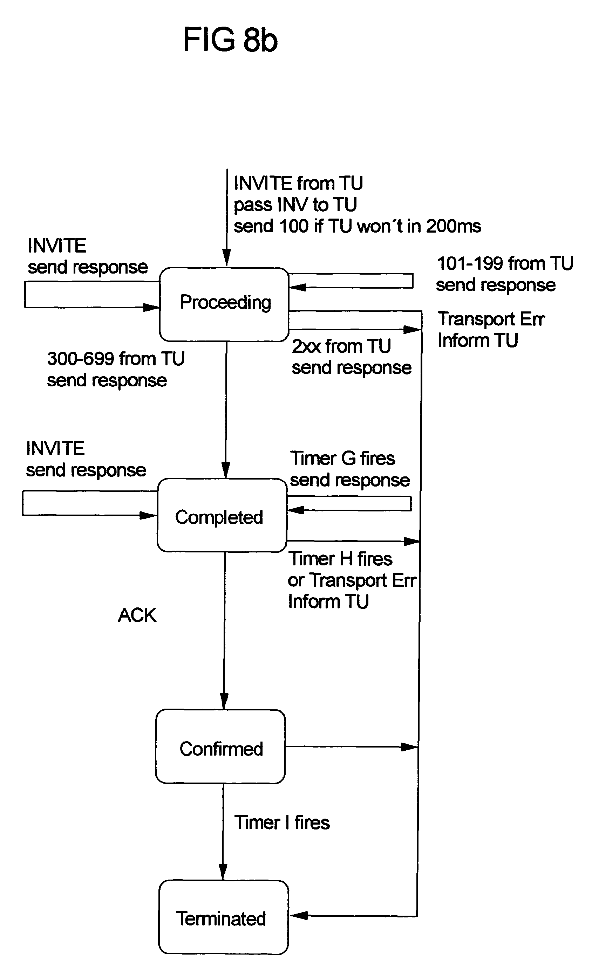

As examples for state machines, Figure 8a depicts a state diagram for an INVITE Client transaction state machine according to RFC 3261 and Fig. 8b depicts a state diagram for an INVITE Server transaction state machine according to RFC 3261.

In Figure 8a, a client transaction is initiated by a Transaction User (TU) with an INVITE request. The initial state is *Calling*. In this state, the request is retransmitted for unreliable transport until a response arrives. The retransmission time is controlled by a timer A. The time, in which the transaction waits for a response, is determined by a Timer B. Upon receiving a provisional response, the transaction transitions to the *Proceeding* state; upon receiving a 2xx final response, the transaction is terminated; upon receiving a non-2xx final response, the transaction enters to the *Completed* state, and generates an ACK for retransmitting. The transaction informs the TU about the first response. In the *Proceeding* state, the client transaction stops request transmission. All responses are passed to the TU. The transaction acknowledges a non-2xx final response with an ACK and then enters the *Completed* state. Upon receiving a 2xx final response it becomes terminated.

In Figure 8b, the respective states of the state machine at the Server side are shown. The possible states are *Proceeding, Completed, Confirmed* and *Terminated*. When a server transaction is constructed for a request, it enters the *Proceeding* state. The server transaction must generate a 100 (Trying) response unless it knows that the TU will generate a provisional or final response within 200 ms, in which case it may generate a 100 (Trying) response. If, while in the *Proceeding* state, the TU passes a 2xx response to the server transaction, the server transaction must pass this response to the transport layer for transmission. While in the *Proceeding* state, if the TU passes a response with status code from 300 to 699 to the server transaction, the response must be passed to the transport layer for transmission, and the state machine must enter the *Completed* state. For unreliable transports, a timer G is set to fire in T1 seconds, and is not set to fire for reliable transports. When the *Completed* state is entered, timer H must be set to fire in 64*T1 seconds for all transports. If an ACK is received while the server transaction is in the *Completed* state, the server transaction must transition to the *Confirmed* state. As Timer G is ignored in this state, any retransmissions of the response will cease. If timer H fires while in the *Completed* state, it implies that the ACK was never received. In this case, the server transaction must transition to the *Terminated* state, and must indicate to the TU that a transaction failure has occurred.

With its increase in popularity, SIP becomes a viable target for attackers. Especially as SIP is based on free, open standards, malicious users can easily mount attacks that target weaknesses in the specification.

A rather simple to launch attack is a Denial-of-Service (DoS) flooding attack where the adversary sends a high amount of traffic to a target SIP proxy with the goal to terminate or slow down its operation. Such messages would consist of regular well-formated SIP messages like INVITE or REGISTER, but due to the sheer mass of the messages the proxy encounters, it won't be able to process them in due time. Other attacks may include Message Tampering, Call Hijacking, call fraud, password hacking and other threats.

The detection of Denial-of-Service flooding and other attacks has been the subject of intense academic work. Sekar et al: Specification-based Anomaly Detection: A New Approach for Detecting Network Intrusions, ACM Computer and Communication Security Conference (CCS), 2002, was the first who presented the concept of specification-based anomaly detection, outlining the concept on a TCP state model. Specification-based detection techniques are based on manually developed specifications that capture legitimate system behaviours.

Eric Y. Chen: Detecting DoS Attacks on SIP Systems, 1st IEEE Workshop on VolP Management and Security, Vancouver, Canada, 2006, describes a state model for SIP for anomaly detection. His model is based solely on the detection of "Error states". Another state machine specification is presented by Sengar et al.: VoIP Intrusion Detection Through Interacting Protocol State Machine, IEEE DSN 2006, Juni 2006. Sengar et al. chose an approach which models a SIP / RTP interaction state model. A problem associated with this approach is the difficulty to measure RTP traffic. In contrast to SIP, RTP doesn't necessarily have to pass the proxy. Instead, it can be exchanged end-to-end by the communicating user agents.

The problem underlying the present invention is to provide for an effective method and apparatus that allow to detect anomalies in SIP IP-Networks such as DoS flooding attacks.

This problem is solved by a method with the features of claim 1, a telecommunications apparatus with the features of claim 21 and a computer program product with the features of claim 23. Embodiments of the invention are identified in the dependent claims.

Accordingly, in one aspect of the invention there is provided a method which models a SIP Proxy Server's server transactions by finite state machines on the basis of passively monitored SIP messages, each state machine modeling a server transaction of the SIP Proxy Server. Statistical evaluation on the modeled state machines is performed and from the statistical evaluation it is detected if an anomaly is present.

It is thus provided a method to detect attacks, i.e., high-traffic flooding attacks on SIP-based architectures through a dedicated monitoring system that examines all incoming traffic. The monitoring system implements an adapted model of the SIP state machine specification and is thus able to detect deviation from any normal operation. In an embodiment, through communication with a firewall component, the invention allows to block offending traffic and thus keep a service alive even under attack conditions.

The present invention delivers statistical information by measuring and evaluating specific variables or parameters of the state machines on at least one of a transaction level, sender level or global level. These variables will now be discussed in more detail. Any combination and subset of these variables may be measured and evaluated.

In one embodiment, the statistical evaluation comprises counting the number of active transactions that are being processed at any specific time.

In another embodiment, the statistical evaluation comprises evaluating active replies generated by the state machines. Further, in one embodiment, active replies of different response classes are considered and the number of replies within each class is counted. The number and types of active replies in each class is a good hint to the general status of the proxy server. This is true especially for error replies larger than 3xx.

Combined in its response class (1xx, 2xx, 3xx, 4xx, 5xx, 6xx), the number of replies within each class is counted.

In still another embodiment, the statistical evaluation comprises measuring the amount of new transactions that are created within a specific time. It is thus measured the amount of new transaction that are created within the proxy server over time. A new server transaction begins when a new request from an outside client arrives (*Idle* State - > *Proceeding* State or *Idle* State -> *Trying* State). Client transactions started by the server are not taken into account. Each transaction has only one such transition. By differentiating new and currently active transactions, it is easy to detect peak message flows to the proxy server.

In still another embodiment, the statistical evaluation comprises measuring transaction terminations. It is measured how a server transaction is terminated. Every transaction is terminated with a timeout event. The focus is on timers C and H for INVITE transactions and timer F for non-INVITE transactions.

In still another embodiment, the statistical evaluation comprises evaluating intrastate events of the modelled state machines. Different events can occur within a transaction state that do not lead to a state change. It is measured, e.g., the time required by the proxy server to generate the first 1xx provisional response to an INVITE transaction. The retransmission messages within each state may also be counted. Of special interest are out-of-specification events, i.e. events that are not valid for the SIP state model, including *Proceeding ->* ACK -> *Proceeding, Completed ->* 1XX -> *Completed, Confirmed ->* INVITE -> *Confirmed* and *Confirmed ->* 1XX -> *Confirmed* state changes.

In still another embodiment, the statistical evaluation comprises evaluating state transition events of the modelled state machines. Whenever the state machine proceeds from one state to another it is measured how long the transaction has stayed in the previous state and which event causes the state transition. The transitions *Proceeding -* > *Completed* and *Trying -> Completed* are especially important as they are due to final responses (≥200) from the proxy. It is distinguished on the response class level (i.e. transition due to a 2xx or 5xx reply).

The statistical evaluation of one, several or all of the above measurements is carried out on at least one of a transaction level, sender level or global level.

At the transaction level, statistical data are gathered within each single transaction that is modeled by a finite state machine, referred to as state machine in this text. The transaction state machine can follow and verify message flows generated within a single transaction. As it has the knowledge about the full SIP specification, it can detect non-conforming behaviour within each active transaction. The main target for this monitoring level is to detect unnecessary message flows within one ongoing transaction. Two examples regard pending open INVITE transactions and closed transactions. Regarding pending open INVITE transactions, after a User Agent (UA) has sent an initial INVITE message to the proxy, it waits for provisional 1xx messages and / or a final answer from the proxy. An INVITE can take a considerable amount of time, depending on the callee's reaction. During this time the server transaction remains in the 'Proceeding' state. While the UA is allowed to re-send his INVITE in this state in case it has not received a previous provisional 1xx-response, multiple re-sent INVITEs at this stage are generally a sign of a misconfigured UA or the beginning of a single-source message flow. Such messages can generate considerable traffic at the SIP proxy. Regarding closed transactions, after a server transaction has moved to the Confirmed state, the proxy server is required to keep transaction state for several seconds (Timers I and J) to match any resubmitted messages to previous transactions. Again, if multiple resubmitted messages are encountered, this is generally a sign of a misconfigured UA or a part of s single message flow, generating overhead traffic at the SIP proxy server.

At the sender level, statistical data regarding all transactions that originate from the same device based on its IP address are evaluated. In the most basic case, a single IP address corresponds to a single user (one SIP phone connected to the proxy). There are exceptions from this rule, which are mostly Private Branch Exchange (PBX) which manage multiple users. Also Session Border Controllers or NAT Gateways can be the single source for multiple different senders, and they are distinguishable by their port number. If a malicious user launches an attack from a single source, he is likely to generate different transactions during his flood to increase the processing overhead at the proxy server, and thus the attack wouldn't be recognised at the single transaction monitoring level. By evaluating the combined statistics of each single IP address, it is possible to detect such anomalies.

At the global level, the gathering of statistical information of all ongoing and/or recent transactions is performed. At the final level, the monitoring of the local level is extended to include all ongoing transactions. This becomes necessary if attacks are launched concurrently from different sources, which is, e.g., the case in a distributed Denial-of-Service (DDoS) attack. Monitoring the global level state changes is mainly applied for attack detection, while the information retrieved from the transaction level and user level may be used to mitigate an attack.

The information gained from the state model at the sender level can be used to control a network firewall. Rules may be set at the firewall to let some requests through or reject them. Host address information as well as call participant and call information may be retrieved so whole traffic from a user or selectively only some part of it may be stopped. For a misconfigured UA, which sends redundant requests which disturb the proxy server, the redundant requests can be selectively rejected by the filter. The traffic flow at the proxy is reduced while the ongoing transaction is undisturbed.

In still another embodiment, when the presence of an anomaly is determined, filtering rules are applied to incoming traffic on an ingress connection to the SIP Proxy Server. Such filtering Rules may, e.g., control a network firework as discussed in the previous paragraph.

In still another embodiment at least one data frame and/or IP packet of ingress traffic to the SIP Proxy Server is stored in a cache and the data frame and/or IP packet stored in the cache is allowed to proceed to the SIP Proxy Server only if the application of the filtering rules provides a corresponding verdict. This way, unwanted traffic may be filtered.

In an embodiment of the invention, the modeled finite state machines are identical to the respective finite state machines of the SIP Proxy Server such that the statistical data obtained on the modeled state machine closely match the situation at the SIP Proxy Server. However, minor modifications may be implemented. For example, the modification that a SIP 2xx response may not be considered to start a new transaction by the modeled state machine. For the purpose of the invention, this differentiation is not necessary, hence every ACK is considered as part of the INVITE transaction. In another example, a state information is eventually freed so that each transaction will eventually be terminated. This is due to two reasons: to free resources in the inventive model which could be a source for a self-inflicted DoS, and the lack of ICMP support. According to RFC 3261 a server transaction could terminate because of a transport error, to be indicated by ICMP messages. A self-inflicted DoS can occur, e.g., when responses from the server are lost or the server may ignore some requests, in which case the current transaction would never terminate. According to RFC 3261, a SIP UAS can send non-100 provisional responses every minute to extend the call period, thus probably prolonging information state-keeping infinitely. These differences may be considered within the statistical evaluation. In still another example for a modification of the modeled state machines, also events are modelled that are not allowed within any state. For example, during the Proceeding state of an INVITE transaction an ACK should not arrive and within the Completed state after sending the final response the server should not send provisional responses.

In another embodiment, two different kinds of state machines are modeled depending on whether a SIP message that is the basis for a server transaction is a INVITE message or a Non-INVITE message.

As discussed before, there exist in the SIP context altogether four different state machines: User Agent Server (UAS) INVITE state machine, UAS Non-INVITE state machine, User Agent Client (UAC) INVITE state machine, and UAC Non-INVITE state machine. The present invention state machine modeling uses two state machines, the UAS INVITE state machine and the UAS Non-INVITE state machine as the invention models the Proxy Servers' server transactions only.

In another aspect of the present invention there is provided a telecommunications apparatus for anomaly detection in SIP IP-Networks comprising
- means for passively monitoring of SIP messages between at least one SIP User agent and a SIP Proxy Server,
- a finite state machine module modeling the SIP Proxy Server's server transactions on the basis of the passively monitored SIP messages, each state machine of the module modeling a server transaction of the SIP Proxy Server, and
- means for performing statistical evaluation on the state machines.

In one embodiment, the means for passively monitoring of SIP messages between at least one SIP User agent and a SIP Proxy Server comprise a bridge which copies incoming data traffic and sends it to at least the finite state machine module. The bridge may also include a cache in which a data frame or IP packet is stored until a verdict is issued by the apparatus if the frame or IP packet is allowed to proceed to the Proxy Server.

The invention further regards a computer program product comprising software code for performing the steps of claim 1 when said product is run on a computer. The computer program product may be directly loadable into the internal memory of a digital computer.

The invention will next be explained in more detail below on the basis of exemplary embodiments with reference to the Figures, in which:
- Fig. 1: shows schematically a telecommunications apparatus in accordance with principles of the present invention embedded in a SIP architecture, the telecommunications apparatus comprising finite state machines modeling finite state machines of a SIP Proxy Server's server transactions;
- Fig. 2: shows an embodiment of the telecommunications apparatus indicating functional modules of the telecommunications apparatus;
- Fig. 3a: a SIP transaction state model of a User Agent Server INVITE state machine;
- Fig. 3b: a SIP transaction state model for a User Agent Server Non-INVITE state machine;
- Fig. 4: a table indicating measurement variables evaluated for statistical evaluation of modelled state machines of a telecommunications apparatus in accordance with principles of the present invention;
- Fig. 5: measurements showing maximum values of measured variables for the situation of background traffic and three different attack traffics, both on the sender level and the global level, whereby the attack traffic comprises 80 messages per second;
- Fig. 6: measurements showing maximum values of measured variables for the situation of background traffic and three different attack traffics, both on the sender level and the global level, whereby the attack traffic comprises 500 messages per second;
- Fig. 7: measurements showing maximum values of measured variables for the situation of background traffic and three different attack traffics, both on the sender level and the global level, whereby the attack traffic comprises 2000 messages per second;
- Fig. 8a: a state diagram for an INVITE Client transaction state machine according to RFC 3261; and
- Fig. 8b: a state diagram for an INVITE Server transaction state machine according to RFC 3261.

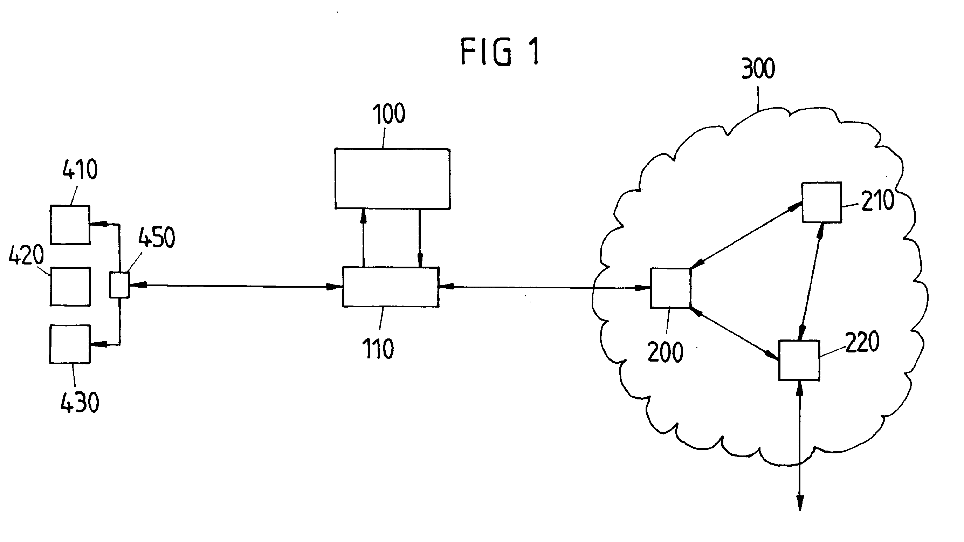

Figure 1 shows a SIP architecture together with a telecommunications apparatus 100 which provide for an analysis and decision module for attacks that target directly the SIP protocol. Associated with and/or part of the telecommunications apparatus 100 is a scalable network bridge 110, which receives incoming traffic directed towards an ingress SIP Proxy Server 200 of a SIP-based IP network 300.

The traffic originates from one or a plurality of User Agents (UA) that generate or terminate SIP requests. For illustration purposes only, several User Agents 410, 420, 430 are depicted in Figure 1 that are connected via a PBX 450 or the like to the SIP Proxy Server 200. However, any number of User Agents by any known means may be connected to the SIP Proxy Server 200.

Figure 1, with the exception of the telecommunications apparatus 100 and the bridge 110, depicts a standard SIP architecture including User Agents 410, 420, 430, a SIP-based IP network 300, a SIP Registrar 210, with respect to which users log in and announce their availability in the SIP network 300, and SIP Proxy Servers 200, 220 that forward requests within or to the appropriate SIP network. In Figure 1, SIP Proxy Server 200 is an inbound proxy 200 handling all incoming SIP requests (and possibly performing additional security checks). SIP Proxy Server 220 is an outbound proxy that regulates outgoing routing from one network to a foreign network (not shown in Figure 1).

The SIP-based IP network may be a SIP-based VoIP network but could be any other SIP-based network such as an IPTV network or a IMS Next Generation Network.

The network bridge 110 and the telecommunications apparatus 100 are located at the ingress connection to the SIP Proxy Server 200. Alternatively, the bridge 110 and the telecommunications apparatus 100 could be implemented directly at the SIP Proxy Server 200. In any case, the network bridge 110 and telecommunications apparatus 100 preferably are placed at a network 300 entry point.

The bridge 110 receives traffic from the User Agents 410, 420, 430. It acts as a traffic repeater that copies the incoming traffic and directs the copy to the telecommunications apparatus 100. The telecommunications apparatus 100 and the functions it performs are thus invisible for the User Agent that contacts the SIP Proxy Server 200 which is to be protected by the telecommunications apparatus 100. This is important in order to guarantee that the apparatus 100 itself may not become subject of an attack. The architecture operates independent from the protected SIP Proxy Server 200 by monitoring ingress and egress traffic.

The telecommunications apparatus 100 includes intelligence in form of independent monitoring and detection algorithms. Each algorithm has in one embodiment access to the full traffic flow from and to the SIP Proxy Server 200 and can raise alarm messages to the operator and modify the system's firewall policies to mitigate attacks.

Notwithstanding the presence of additional detection algorithms, the telecommunications apparatus 100 of the present invention includes transaction state machines that model the SIP Proxy Server's 200 SIP server transactions on the basis of the passively monitored SIP messages generated by the User Agents.

As is well known to those skilled in the art, a Proxy Server receives SIP requests and forwards them on behalf of the requestor. In the present invention, we consider SIP requests originating from the User Agent. A SIP transaction consists of a single request and any responses to that request, which include zero or more provisional responses and one or more final responses. When a Proxy Server receives a request, a state machine is instantiated to accomplish the transaction. In addition there is a state machine instantiated at the user agent. However, we consider the state machine instantiated at the Proxy Server only.

The state machine defines which events are valid and what and how the state will change if a certain event occurs.

For each state machine of the Proxy Server 200, the telecommunications apparatus 100 creates a model state machine on the basis of the passively monitored SIP messages of the respective transactions. Statistical evaluation of the model state machines is performed and it is determined from the statistical evaluation if an anomaly is present.

Accordingly, for each state machine in the Proxy Server 200 an identical or essentially identical state machine is created in the telecommunications apparatus 100, such model state machine being invisible for the user agent that contacts the Proxy Server 200, and thus protected against attacks. As the goal of the protection scheme is to analyse high traffic flows common for Denial-of-Service (DoS) attacks, the inventive solution has to be itself resource-aware to not become a subject of a DoS by itself. Hence, preferably, to conserve memory, only SIP state absolutely necessary for analysis are be modelled. In particular, Dialog state modeling is not performed as Dialogs can have a potential unlimited duration, which is solely dependant on user behaviour that initiate or tear-down the dialog.

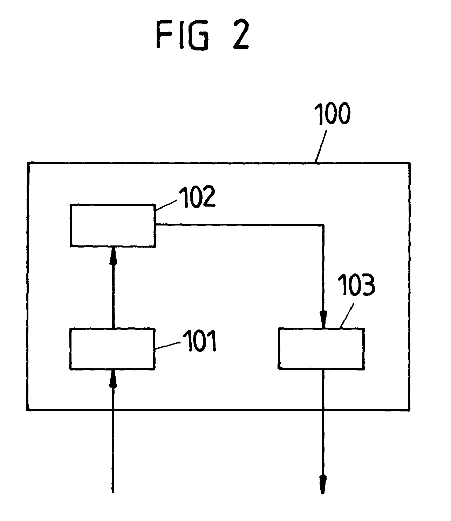

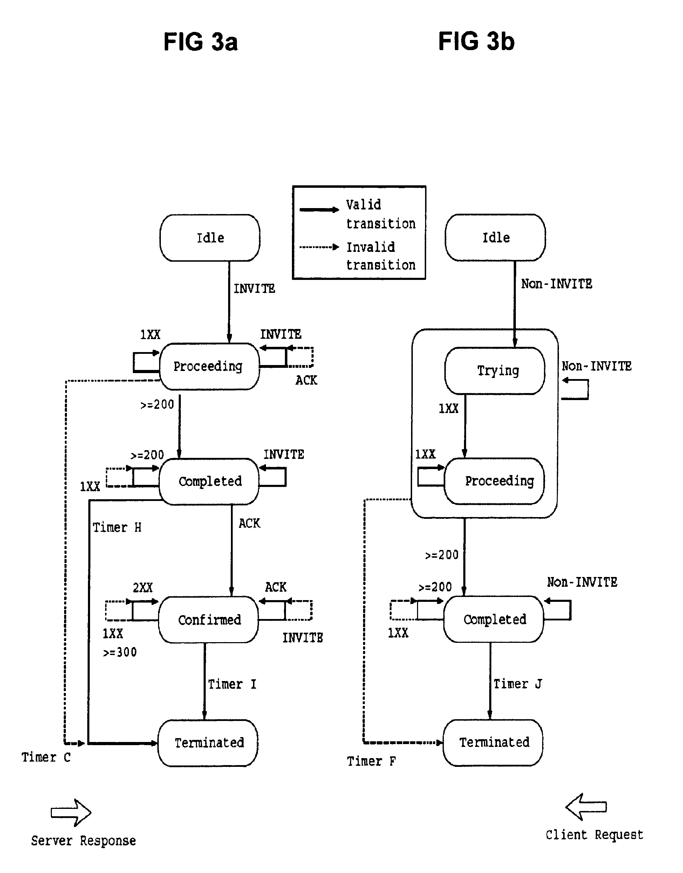

Figure 2 depicts an embodiment of the telecommunications apparatus 100 of Figure 1. The apparatus 100 includes a state machine specification module 101, which includes state machines which model respective state machines of the SIP Proxy Server 200. Figures 3a and 3b show examples of such state machines, namely, a User Agent Server (UAS) INVITE state machine and a UAS Non-INVITE state machine.

It is modelled only the proxy server's 200 server transactions with the state model. With this modeling, it is possible to follow the protected server's 200 operation at any incoming SIP message. It would not be gained additional information by modeling proxy client transactions, as at the proxy server 200 those are only triggered after previous incoming messages. Furthermore, it would require additional resources in the implementation.

The schematic SIP state machine model as depicted in Figures 3a, 3b follows closely the SIP specification for server transactions with the same naming conventions. The two state machines, the UAS INVITE state machine and the UAS Non-INVITE state machine have altogether six different states, namely, *Idle, Trying* (only for Non-INVITEs), *Proceeding, Completed, Confirmed* (only for INVITEs), and *Terminated.* State transitions are indicated by message events (SIP requests or responses) and timeout events (Timers C, F, H, I, and J according to RFC 3261).

However, the state machine model may vary from the SIP specification to better fit anomaly detection. Such modifications may regard the inclusion of 2xx replies into the model, freeing of state information and the modeling of events not allowed within a state, as has already been discussed above. As to the modeling of events not allowed or valid within a SIP state (out-of-specification events), it is pointed out that Figures 3a, 3b indicate such events by dashed lines. These events include the intrastate events *Proceeding ->* ACK -> *Proceeding, Completed ->* 1XX -> *Completed, Confirmed* -> INVITE -> *Confirmed* and *Confirmed ->* 1XX -> *Confirmed* state changes.

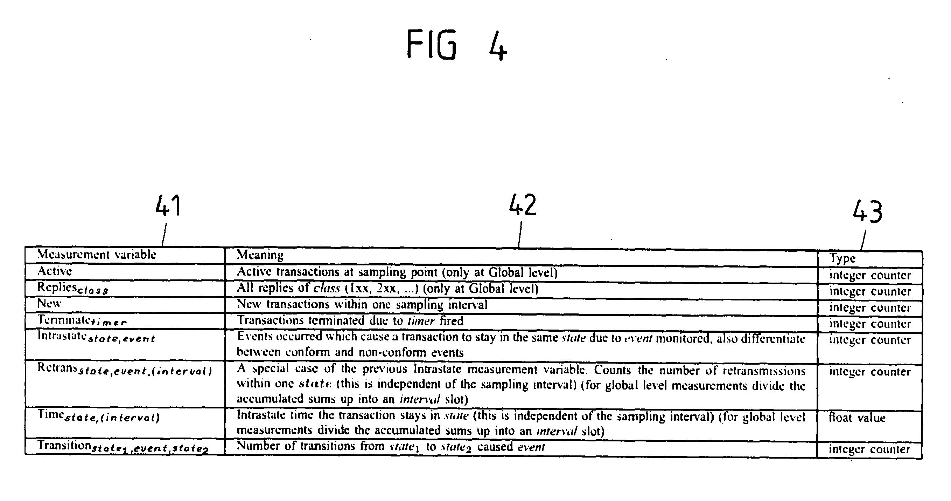

The apparatus 100 further comprises a statistics module 102, which makes measurements and/or performs statistics on the state machines of module 101. The kind of statistical evaluation performed and the results of such statistical evaluation will be further discussed with respect to the tables of Figures 4 to 7.

The statistics module 102 may include a decision module determining from the statistical evaluation if an anomaly is present or likely. Such decision module may also be separate from the decision module and may even be located outside apparatus 100, e.g., in a network security center.

The apparatus 100, optionally, further comprises a filtering rules module 103, which is connected to the statistics module 102. In case the statistics module determines from the statistical evaluation that an anomaly is present, such information is provided to the filtering rules module 103. The filtering module 103 may, on the basis of such information and possibly on the basis of additional information provided by other detection algorithms not shown in Figure 2, decide that a data frame or IP packet that is stored in a cache of bridge 110 is allowed or not allowed to proceed to SIP Proxy Server 200.

For example, if it is determined that an attack originates from a single IP address, as counter measure it could be implemented that all data packets from that IP address are dropped. Also, a white list of valid users may be set up. When detecting an anomaly, during a specific time only white listed users could be served.

Apparatus 100 which includes state machine specification module 101 monitors all incoming and outgoing SIP messages and updates its internal state with each monitored message according to our SIP transaction model. State changes can be triggered by an intercepted SIP message or by a timer event. One part of successful attack detection and mitigation is the definition of appropriate measurement parameters, which are learned during test runs. Of particular interest are threshold values that differentiate attack traffic from regular traffic provided from the background traffic model.

Figure 4 shows a table of suitable measurement parameters or variables which are evaluated statistically by apparatus 100. The first column 41 includes the measurement variables. The second column 42 provides an explanation of the respective measurement variable. The third column 43 indicates the type (integer counter or float value).

For example, in Figure 4, at the sender level for INVITE transactions, Intrastate_{completed}, request indicates the number of requests during one sampling interval that occurred from the same sender while any of this sender's transactions are currently in the completed state. In this case only another INVITE method is allowed. At the global level for any transaction, Retrans_{completed, reply, [5,8]} indicates how many transactions had 5 to 8 replies in the completed state before the transaction changes to another state.

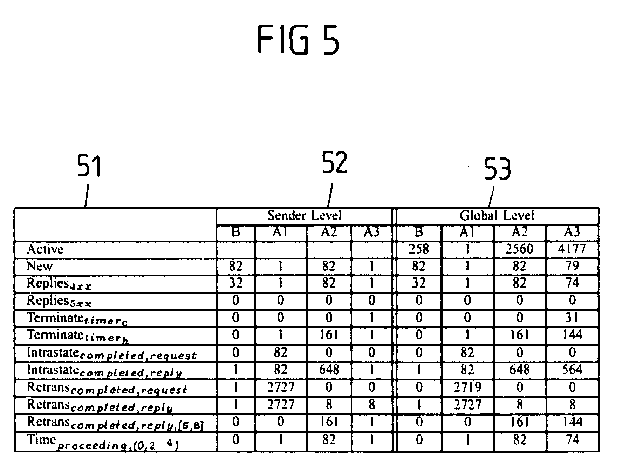

Figures 5 to 7 show the results of a simulation in which the incoming traffic to the network bridge 110 is modelled by an attack generator and a background traffic generator. To validate the inventive specification-based SIP anomaly detection and mitigation approach, three scenarios were created. Within each scenario, the background traffic generator is configured to launch and respond to 40 REGISTER messages and 80 INVITE messages per second. Then three different attacks A1, A2, A3 against the protected SIP proxy server were launched.

Attack A1 regards a simulated broken UA attack. Within this scenario, a valid user generates and re-sends continuously a valid and fixed INVITE message. As such, the transaction ID does not change with new messages. The responses need not be acknowledged. Attack A2 regards single source flooding. Maliciously overwhelming the target proxy server with diverse invitations to an unregistered user, aiming to disturb server operation. As such, the transaction ID does change with each new message. Attack A3 regards an DDoS INVITE attack. The attack is the same as attack 2, however, through an IP spoofing tool each new message seems to originate from a different sender.

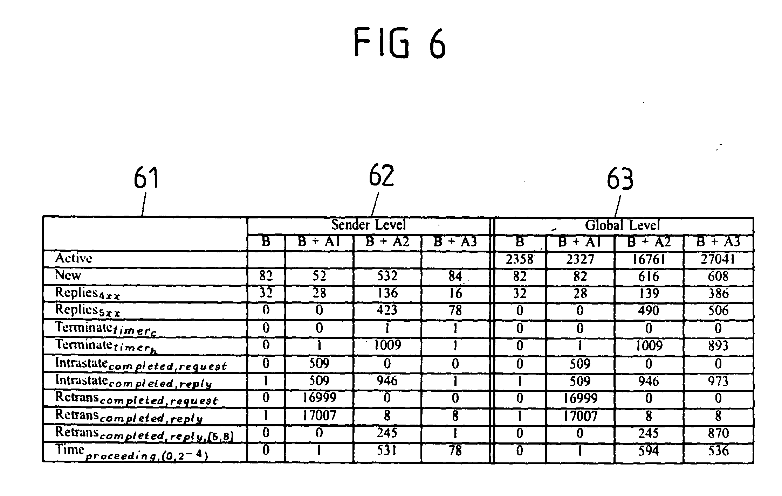

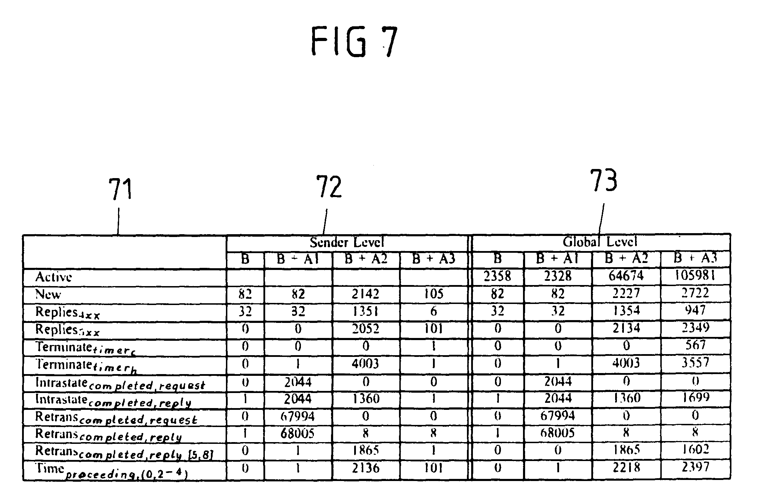

The simulations were run in several different configurations. First, there was launched background traffic and attack traffic individually (at 80 INVITEs/s) to show how they both differ. The results are shown in Figure 5. Second, flooding simulations were performed in combination with the background model running at 80 INVITEs/s. Flooding scenarios were conducted with a significantly higher network load (500 and 2000 INVITEs/s) to reflect a real DoS threat, see Figures 6 and 7. To differentiate between normal and attack conditions, the firewall filter and alarm logic at first were deactivated and then activated for attack detection and mitigation.

In Figures 5 to 7, measured integer counters are combined into a histogram at the local and global monitoring level. To get an answer to the question how often an event occurred, the monitor would produce an interval range instead of the exact answer. Likewise, for float values, there are defined interval ranges. Sampling calculation was done at regular sampling intervals.

In Figures 5 to 7, the first column 51, 61, 71 indicates the measurement variable. The second column 52, 62, 72 indicates the results for attacks A1, A2, A3 at the sender level. The third column 53, 63, 73 indicates the results for attacks A1, A2, A3 at the global level.

As can be seen from Figures 5 to 7, clearly, regular SIP traffic generates a different pattern at the model state machines than malicious traffic. All three attacks A1, A2, A3 can be differentiated from normal traffic easily, as a normal traffic does not generate an abundance of time outs (Terminate events), redundant message that keep a transaction within a state (Intrastate events), redundant retransmissions (Retrans events) or higher processing times (Time events). Each attack type produces a large amount of at least one such particular event, which clearly shows its occurrence.

More particularly, the clearest indication for attack A1 is the high amount of request retransmissions which trigger a high flood of server reply retransmissions. A clear indication for attack A2 is a large amount of server replies, which are due to the open transactions generated by this attack. The same holds true for attack 3, albeit at the global measurement level.

Both attacks A1 and A2 can be detected at the sender level, while attack 3 can only reliably be detected at the global level, i.e., when evaluating statistical summaries of all recent ongoing transactions and not only of transactions that are from the same device/IP address. Statistical summaries of the global level allow to receive a feedback on the current system state. As attacks A1 and A2 can be detected at the sender level, for attack mitigation is possible to temporarily blocking offending senders.

The combination of background traffic with high volume flooding shown in Figures 6 and 7 provides a similar picture. Again, a huge amount of intrastate and retransmission events clearly indicates the offender as the sender level for attacks A1 and A2, allowing to block it temporarily. Attack A3 cannot be mitigated on the sender level. Particularly interesting is the high amount of replies₅ₓₓ, showing an overload at the SIP Proxy Server. While the SIP Proxy Server refuses to process further messages, the scalable state machine keeps track of the current network condition even under load.

For performance evaluation, there has also been measured latency time, CPU load and memory usage of the state machine implementation. Latency time depends on the setting of the basic sampling rate. After experiments with different values of the basic sampling rate, it was determined that attacks A1, A2 and A3 are detectable with a minimum latency time of under 0.3 s if the basic sampling rate is set to 0.1 s. Mitigation feature for attacks A1 and A2 become effective within 0.3 s.

The present invention, in contrast to common DoS detection solutions based on counting incoming messages over time, provides for a very low false error rate. Given the right firewall setup, malicious traffic flows can be selectively blocked, and hence the SIP proxy server be protected. As the implementation runs as a passive self-contained monitoring solution, it can be deployed in conjunction with any SIP network, including different VoIP networks or IMS setups.

The present invention was described primarily with respect to SIP DoS attacks. However, the inventive method and telecommunications apparatus are similarly suitable for detecting other anomalies such as misuse detection, call fraud, password hacking, misuse detection and even spam over IP detection. Particularly, spam over IP detection is an interesting application. By statistical evaluation of model state machines, spam can be detected and filtered similarly.

## Claims

1. A method of anomaly detection in Internet-Protocol (IP)-Networks that use the Session Initiation Protocol (SIP) for communication (SIP IP-Networks), the method comprising:
- passively monitoring of SIP messages between at least one SIP User agent (410, 420, 430) and a SIP Proxy Server (200),
- modeling the SIP Proxy Server's server transactions by finite state machines on the basis of the passively monitored SIP messages, each state machine modeling a server transaction of the SIP Proxy Server (200),
- performing statistical evaluation on the state machines, and
- determining from the statistical evaluation if an anomaly is present or likely.

2. The method of claim 1, **characterized in that** the statistical evaluation comprises counting the number of active transactions that are being processed at any specific time.

3. The method of claim 1 or 2, **characterized in that** the statistical evaluation comprises evaluating active replies generated by the state machines.

4. The method of claim 3, **characterized in that** active replies of different response classes are considered and that the number of replies within each class is counted.

5. The method of any preceding claim, **characterized in that** statistical evaluation comprises measuring the amount of new transactions that are created within a specific time.

6. The method of any preceding claim, **characterized in that** statistical evaluation comprises measuring transaction terminations.

7. The method of any preceding claim, **characterized in that** the statistical evaluation comprises evaluating intrastate events of the modelled state machines.

8. The method of claim 7, **characterized in that** the statistical evaluation comprises evaluating the number of retransmission messages within one state.

9. The method of any preceding claim, **characterized in that** the statistical evaluation comprises evaluating state transition events of the modelled state machines.

10. The method of claim 9, **characterized in that** it is measured how long a transaction has stayed in a previous state and/or which event caused the state transition when a state machine proceeds from one state to another.

11. The method of any preceding claim, **characterized in that** statistical evaluation comprises the gathering of statistical data at the transaction level, i.e., within each single transaction.

12. The method of any preceding claim, **characterized in that** statistical evaluation comprises the gathering of statistical data at the sender level, i.e., all transactions that originate from the same device based on its IP address are evaluated.

13. The method of any preceding claim, **characterized in that** statistical evaluation comprises the gathering of statistical data at the global level, i.e., gathering of statistical information of all ongoing and/or recent transactions is performed.

14. The method of any preceding claim, **characterized in that,** when the presence of an anomaly is determined, filtering rules are applied to incoming traffic on an ingress connection to the SIP Proxy Server (200).

15. The method of claim 14, **characterized in that that** at least one data frame and/or IP packet of ingress traffic to the SIP Proxy Server (200) is stored in a cache and that the data frame and/or IP packet stored in the cache is allowed to proceed to the SIP Proxy Server (200) only if the application of the filtering rules provides a corresponding verdict.

16. The method of any preceding claim, **characterized in that** the modeled finite state machines are identical to the respective finite state machines of the SIP Proxy Server (200).

17. The method of any of claims 1 to 15, **characterized in that** the modeled finite state machines are identical to the respective finite state machines of the SIP Proxy Server (200) except for the modification that a SIP 2xx response is not considered to start a new transaction by the modeled state machine.

18. The method of any preceding claim, **characterized in that** the modeled finite state machines are identical to the respective finite state machines of the SIP Proxy Server (200) except for the modification that a state information is eventually freed so that each transaction will eventually be terminated.

19. The method of any preceding claim, **characterized in that** the modeled finite state machines are identical to the respective finite state machines of the SIP Proxy Server (200) except for the modification that also events are modelled that are not allowed within any state.

20. The method of any preceding claim, **characterized in that** two different kinds of state machines are modeled depending on whether a SIP message that is the basis for a server transaction is a INVITE message or a Non-INVITE message.

21. Telecommunication apparatus for anomaly detection in Internet-Protocol (IP)-Networks that use the Session Initiation Protocol (SIP) for communication (SIP IP-Networks), the apparatus comprising:
- means (110) for passively monitoring of SIP messages between at least one SIP User agent (410, 420, 430) and a SIP Proxy Server (200),
- a finite state machine module (101) modeling the SIP Proxy Server's (200) server transactions on the basis of the passively monitored SIP messages, each state machine of the module (101) modeling a server transaction of the SIP Proxy Server (200),
- means (102) for performing statistical evaluation on the state machines.

22. The apparatus of claim 21, **characterized in that** means (110) for passively monitoring of SIP messages between at least one SIP User agent and a SIP Proxy Server comprise a bridge which copies incoming data traffic and sends it to at least the finite state machine module (101).

23. Computer program product comprising software code for performing the steps of claim 1 when said product is run on a computer.
